# EUROPEAN PATENT APPLICATION

(11) **EP 2 527 881 A1**
(43) Date of publication of application: **28.11.2012**
(21) Application number: 12169187.7
(22) Date of filing: 24.05.2012
(51) Int. Cl.: G02B 3/00, G02B 5/04, G02B 27/00, G02B 5/02, G02F 1/1335

(54) **Optical film for reducing color shift and liquid crystal display having the same**

(30) Priority: 24.05.2011 KR 20110049041
(71) Applicant: Samsung Corning Precision Materials Co., Ltd., Gyeongsangbuk-do Gumi-si, 730-735 (KR)
(72) Inventor: Cho, Eun Young, 336-841 Asan-si ChungCheongNam-Do (KR); Park, Seong Sik, 336-841 Asan-si ChungCheongNam-Do (KR); Park, Seung Won, 336-841 Asan-si ChungCheongNam-Do (KR); Sohn, In Sung, 336-841 Asan-si ChungCheongNam-Do (KR)
(74) Representative: Gulde Hengelhaupt Ziebig & Schneider

(57) **Abstract**

A liquid crystal display for reducing color shift includes a liquid crystal layer, which is disposed between front and rear polarizer layers, and an optical film for reducing color shift, which is disposed between the liquid crystal layer and the front polarizer layer. The optical film includes a background layer and a plurality of lens sections engraved in the background layer, the lens sections being spaced apart from each other. Light emitted from the liquid crystal layer has different colors depending on the viewing angle and the grayscale level owing to birefringence characteristics of the liquid crystal layer. The optical film diffuses a portion of the light incident onto each of the lens sections so that the portion of the light is mixed with another portion of the light passing between adjacent lens sections.

## Description

### CROSS REFERENCE TO RELATED APPLICATION

The present application claims priority from Korean Patent Application Number 10-2011-0049041 filed on May 24, 2011, the entire contents of which application are incorporated herein for all purposes by this reference.

### BACKGROUND OF THE INVENTION

### Field of the Invention

The present invention relates to an optical film for a liquid crystal display (LCD) and an LCD having the same, and more particularly, to an optical film for an LCD that has a gradient refractive index and an LCD having the same.

### Description of Related Art

In response to the emergence of the advanced information society, components and devices related to image displays have been significantly improved and rapidly disseminated. Among them, image display devices have been widely distributed for use in TVs, personal computer (PC) monitors, and the like. Moreover, attempts are underway to simultaneously increase the size and reduce the thickness of such display devices.

In general, a liquid crystal display (LCD) is one type of flat panel display, and displays images using liquid crystals. The LCD is widely used throughout industry since it has the advantages of light weight, low drive voltage and low power consumption compared to other display devices.

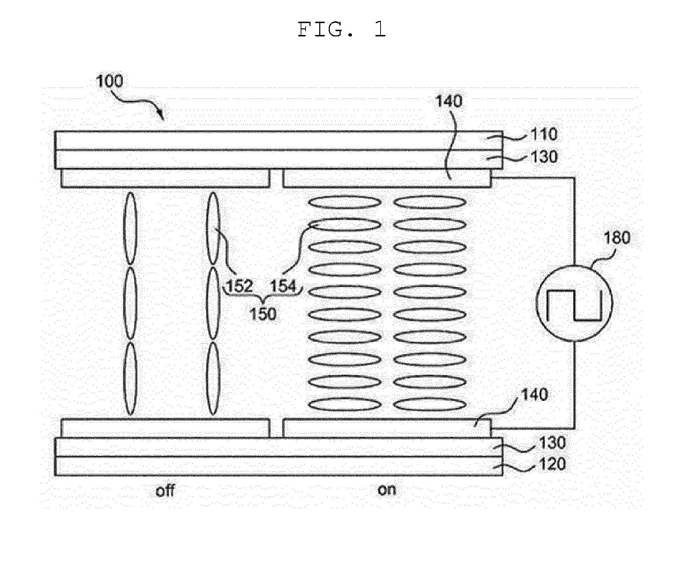

FIG. 1 is a conceptual view schematically showing the basic structure and operating principle of an LCD 100.

With reference by way of example to a conventional vertical alignment (VA) LCD, two polarizer films 110 and 120 are arranged such that their optical axes are oriented perpendicular to each other. Liquid crystal molecules 150 having birefringence characteristics are interposed and arranged between two transparent substrates 130, which are coated with transparent electrodes 140. When an electric field is applied from a power supply unit 180, the liquid crystal molecules move and are aligned perpendicular to the electric field.

Light emitted from a backlight unit is linearly polarized after passing through the first polarizer film 120. As shown in the left of FIG. 1, the liquid crystal molecules remain perpendicular to the substrates when no power is applied. As a result, light that is in a linearly polarized state is blocked by the second polarizer film 110, the optical axis of which is perpendicular to that of the first polarizer film 120.

In the meantime, as shown in the right of FIG. 1, when power is on, the electric field causes the liquid crystal molecules to become horizontally aligned such that they are parallel to the substrates, between the two orthogonal polarizer films 110 and 120. Thus, the linearly polarized light from the first polarizer film is converted into another kind of linearly polarized light, the polarization of which is rotated by 90°, circularly polarized light, or elliptically polarized light while passing through the liquid crystal molecules before it reaches the second polarizer film. The converted light is then able to pass through the second polarizer film. It is possible to gradually change the orientation of the liquid crystal from the vertical orientation to the horizontal orientation by adjusting the intensity of the electric field, thereby allowing control of the intensity of light emission.

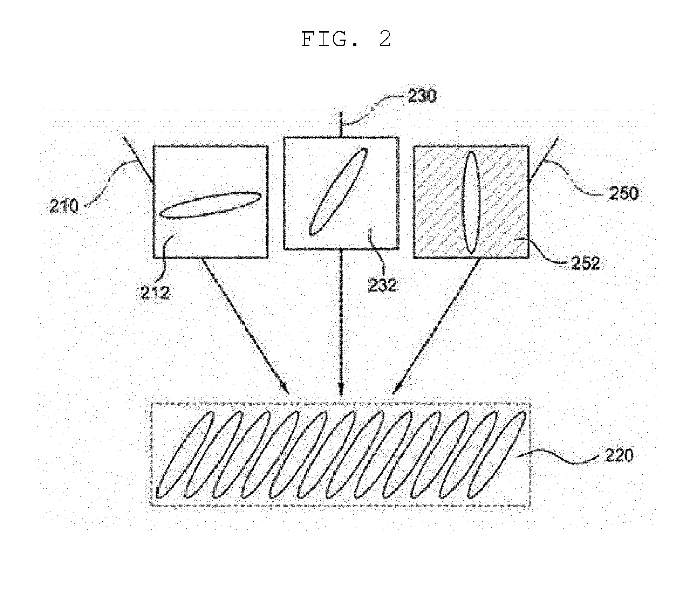

FIG. 2 is a conceptual view showing the orientation and optical transmittance of liquid crystals depending on the viewing angle.

When liquid crystal molecules are aligned in a predetermined direction within a pixel 220, the orientation of the liquid crystal molecules varies depending on the viewing angle.

When viewed from the front left (210), the liquid crystal molecules look as if they are substantially aligned along the horizontal orientation 212, and the screen is relatively bright. When viewed from the front along the line 230, the liquid crystal molecules are seen to be aligned along the orientation 232, which is the same as the orientation inside the pixel 220. In addition, when viewed from the front left (250), the liquid crystal molecules look as if they are substantially aligned along the vertical orientation 252, and the screen is somewhat darker.

Accordingly, the viewing angle of the LCD is greatly limited compared to other displays, which intrinsically emit light, since the intensity and color of light of the LCD varies depending on changes in the viewing angle. A large amount of research has been carried out with the aim of increasing the viewing angle.

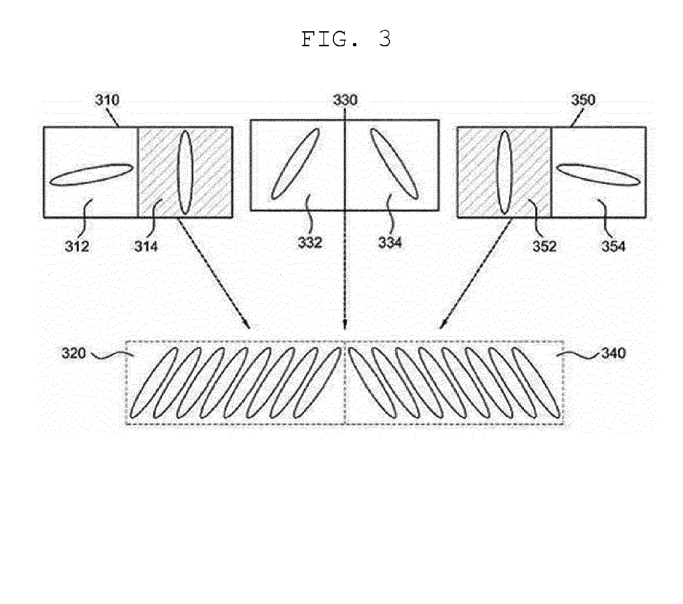

FIG. 3 is a conceptual view showing a conventional attempt to reduce variation in the contrast ratio and color shift depending on the viewing angle.

Referring to FIG. 3, a pixel is divided into two pixel parts, that is, first and second pixel parts 320 and 340, in which the orientations of liquid crystals are symmetrical to each other. Either the liquid crystals oriented as shown in the first pixel part 320 or the liquid crystals oriented as shown in the second pixel part 340 can be seen, depending on the viewing direction of a viewer. The intensity of light reaching the viewer is the total intensity of light of the two pixel parts.

When viewed from the front left (310), liquid crystal molecules in the first pixel part 320 look as if they are aligned along the horizontal orientation 312, and liquid crystal molecules in the second pixel part 320 look as if they are aligned along the vertical orientation 314. Thus, the first pixel part 320 makes the screen look bright. Likewise, when viewed from the front right (350), the liquid crystal molecules in the first pixel part 320 look as if they are aligned along the vertical orientation 352, and the liquid crystal molecules in the second pixel part 340 look as if they are aligned along the horizontal orientation 354. Then, the second pixel part 340 can make the screen look bright. In addition, when viewed from the front, the liquid crystal molecules are seen to be aligned along the orientations 332 and 334, which are the same as the orientations inside the pixel parts 320 and 340. Accordingly, the brightness of the screen observed by the viewer remains the same or similar, and is symmetrical about the vertical center line of the screen, even when the viewing angle changes. This, as a result, makes it possible to reduce variation in the contrast ratio and color shift depending on the viewing angle.

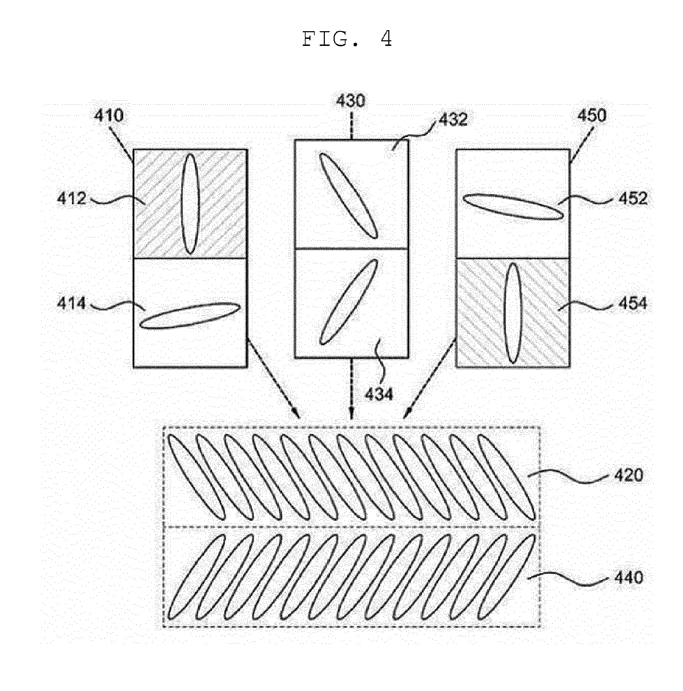

FIG. 4 is a conceptual view showing another conventional approach for reducing variation in the contrast ratio and color shift depending on to the viewing angle.

Referring to FIG. 4, an optical film 420 having birefringence characteristics is added. The birefringence characteristics of the optical film 420 are the same as those of liquid crystal molecules inside a pixel 440 of an LCD panel, and are symmetrical with the orientation of the liquid crystal molecules. Due to the orientation of the liquid crystal molecules inside the pixel 440 and the birefringence characteristics of the optical film, the intensity of light reaching the viewer is the total intensity of light from the optical film 420 and the pixel 440.

Specifically, when viewed from the front left (410), the liquid crystal molecules inside the pixel 440 look as if they are aligned along the horizontal orientation 414, and the imaginary liquid crystals produced by the optical film 420 look as if they are aligned along the vertical orientation 412. The resultant intensity of light is the total intensity of light from the optical film 420 and the pixel 440. Likewise, when viewed from the front right (450), the liquid crystal molecules inside the pixel 440 look as if they are aligned along the vertical orientation 454 and the imaginary liquid crystals produced by the optical film 420 look as if they are aligned along the horizontal orientation 452. The resultant intensity of light is the total intensity of light from the optical film 420 and the pixel 440. In addition, when viewed from the front, the liquid crystal molecules are seen to be aligned along the orientations 434 and 432, which are the same as the orientation inside the pixel 440 and the double-refracted orientation of the optical film 420, respectively.

However, even if the approaches described above are applied, color shift still occurs depending on the viewing angle, and the color changes when the viewing angle increases.

In addition, display devices of the related art, in particular, twisted nematic (TN) mode LCDs, have the problem of gamma-curve distortion and grayscale inversion.

The information disclosed in this Background of the Invention section is only for the enhancement of understanding of the background of the invention, and should not be taken as an acknowledgment or any form of suggestion that this information forms a prior art that would already be known to a person skilled in the art.

### BRIEF SUMMARY OF THE INVENTION

Various aspects of the present invention provide an optical film for a liquid crystal display (LCD) that can reduce color shift in response to an increase in the viewing angle and an LCD having the same.

Also provided is an optical film for an LCD that can reduce gamma-curve distortion and grayscale inversion and an LCD having the same.

Also provided is an optical film for an LCD that can reduce color shift, prevent ghosting, and prevent a decrease in bright-room contrast ratio (BRCR) and resolution by preventing hazing, and an LCD having the same.

The above and other aspects, features and advantages of certain exemplary embodiments of the invention will be more apparent to a person having ordinary skill in the art from the following description.

In an aspect of the present invention, provided is an optical film for reducing color shift in a liquid crystal display. The optical film includes a background layer and a plurality of lens sections formed in the background layer and spaced apart from each other. The lens sections and the background layer have a refractive index gradient that a refractive index gradually changes in a direction from the lens sections to the background layer. Light emitted from a liquid crystal layer has different colors depending on the viewing angle and the grayscale level owing to birefringence characteristics of the liquid crystal layer. A portion of the light incident onto the lens sections is diffused so that the portion of the light is mixed with another portion of the light passing between adjacent lens sections.

Preferably, the refractive index gradient is provided in a width direction of each of the lens sections.

In an exemplary embodiment of the invention, each of the lens sections may have a 1 L portion adjacent to the background layer, and the background layer may have a 1 B portion to an nB portion, the 1 B portion being more adjacent to the 1 L portion than the nB portion. The refractive index of the 1 B portion may be more similar to the refractive index of the 1 L portion than the refractive index of the nB portion.

Preferably, the 1 L portion and the 1 B portion to the nB portion are arranged in a width direction of each of the lens sections (24), thereby the refractive index gradient being one-dimensional in the width direction of each of the lens sections.

In another exemplary embodiment of the invention, the background layer may have a 1 B portion adjacent to each of the lens sections, and each of the lens sections may have a 1 L portion to an nL portion, the 1 L portion being more adjacent to the 1 B portion than the nL portion. The refractive index of the 1 L portion may be more similar to a refractive index of the 1 B portion than a refractive index of the nL portion.

Preferably, the 1 B portion and the 1 L portion to the nL portion are arranged in a width direction of each of the lens sections, thereby the refractive index gradient being one-dimensional in the width direction of each of the lens sections.

Preferably, n is a natural number of 2 or greater.

Preferably, the lens sections have a pattern selected from the group consisting of stripes having a polygonal cross-section, waves having a polygonal cross-section, a matrix having a polygonal cross-section, a honeycomb having a polygonal cross-section, dots having a polygonal cross-section, concentric circles having a polygonal cross-section, stripes having a semicircular cross-section, waves having a semicircular cross-section, a matrix having a semicircular cross-section, a honeycomb having a semicircular cross-section, dots having a semicircular cross-section, concentric circles having a semicircular cross-section, stripes having a semi-elliptical cross-section, waves having a semi-elliptical cross-section, a matrix having a semi-elliptical cross-section, a honeycomb having a semi-elliptical cross-section, dots having a semi-elliptical cross-section, concentric circles having a semi-elliptical cross-section, stripes having a semi-oval cross-section, waves having a semi-oval cross-section, a matrix having a semi-oval cross-section, a honeycomb having a semi-oval cross-section, dots having a semi-oval cross-section, and concentric circles having a semi-oval cross-section.

Preferably, the lens sections are buried in the background layer.

In another aspect of the present invention, a liquid crystal display is disclosed, the liquid crystal display comprising an optical film according to at least one of the above-mentioned features.

Preferably, the lens sections of the optical film for reducing color shift are formed in a rear surface of the background layer that faces a display panel of the liquid crystal display.

Preferably, the optical film for reducing color shift is in close contact with a display panel of the liquid crystal display. More preferably, the optical film directly contacts the liquid crystal display or a minimum distance between the optical film and the liquid crystal display is less than 1 mm.

Preferably, the liquid crystal display further comprises an adhesive, the optical film for reducing color shift being attached to the display panel via the adhesive or wherein the background layer has adhesiveness in itself so as to be directly attached to the display panel.

In a further exemplary embodiment of the invention, both the background layer and the lens sections have a refractive index gradient.

In an exemplary embodiment of the invention, the optical film may have only a one-dimensional refractive index gradient in the width direction of each of the lens sections.

In another exemplary embodiment of the invention, optical film may have symmetry in a refractive index about a centerline in a depth direction thereof.

According to exemplary embodiments of the invention, it is possible to increase the viewing angle and improve the quality of an image displayed by a display device by reducing the color shift in response to an increase in the viewing angle.

In addition, according to exemplary embodiments of the invention, it is possible to reduce gamma-curve distortion and grayscale inversion.

Furthermore, according to exemplary embodiments of the invention, it is possible to increase the bright-room contrast ratio (BRCR) and resolution by preventing ghosting and hazing.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1 to FIG. 4 are views pertaining to the related art, in which

FIG. 1 is a conceptual view schematically showing the basic structure and operating principle of an LCD;

FIG. 2 is a conceptual view showing the orientation and optical transmittance of liquid crystals depending on the viewing angle;

FIG. 3 is a conceptual view showing a conventional attempt to reduce variation in the contrast ratio and color shift depending on the viewing angle; and

FIG. 4 is a conceptual view showing another conventional attempt to reduce variation in the contrast ratio and color shift depending on the viewing angle;

FIG. 5 to FIG. 41 are views pertaining to comparative examples, in which

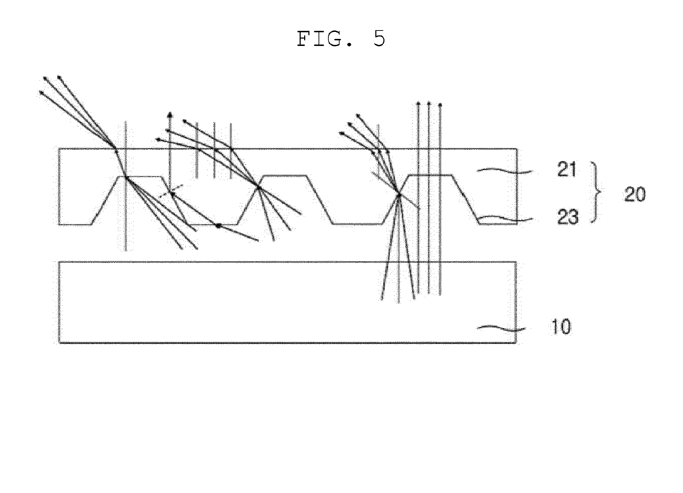

FIG. 5 to FIG. 7 are cross-sectional views showing optical films for reducing color shift according to comparative examples;

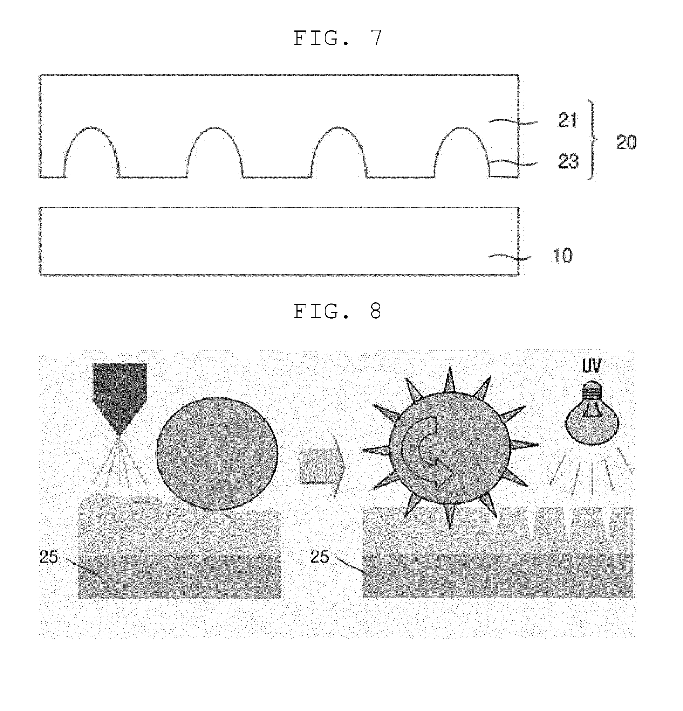

FIG. 8 is a view showing a method of manufacturing an optical film for reducing color shift according to a comparative example;

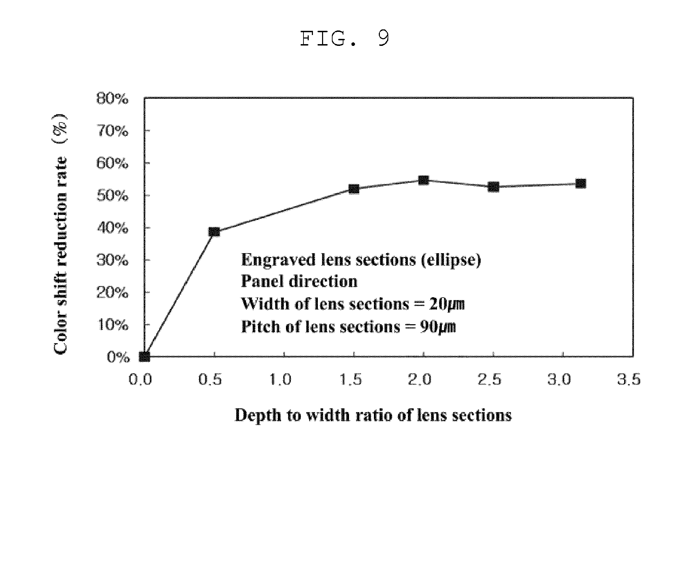

FIG. 9 is a view showing the relationship between the depth to width ratio of the lens sections and the rate of color shift reduction;

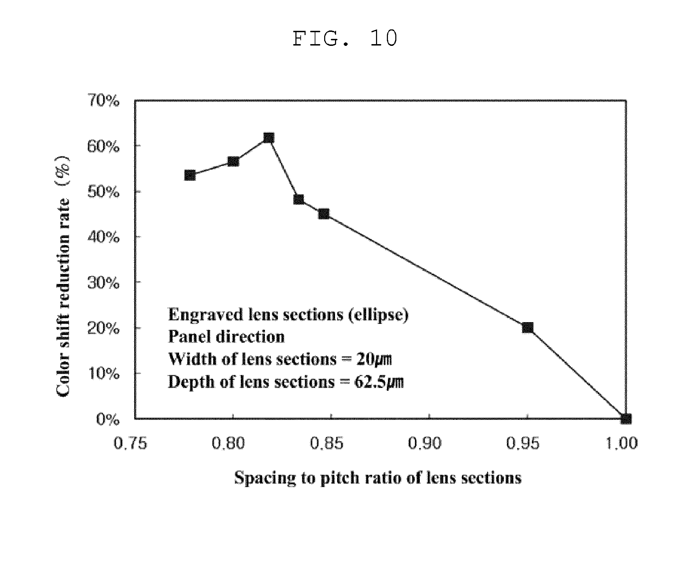

FIG. 10 is a view showing the relationship between the spacing to pitch ratio of the lens sections and the rate of color shift reduction;

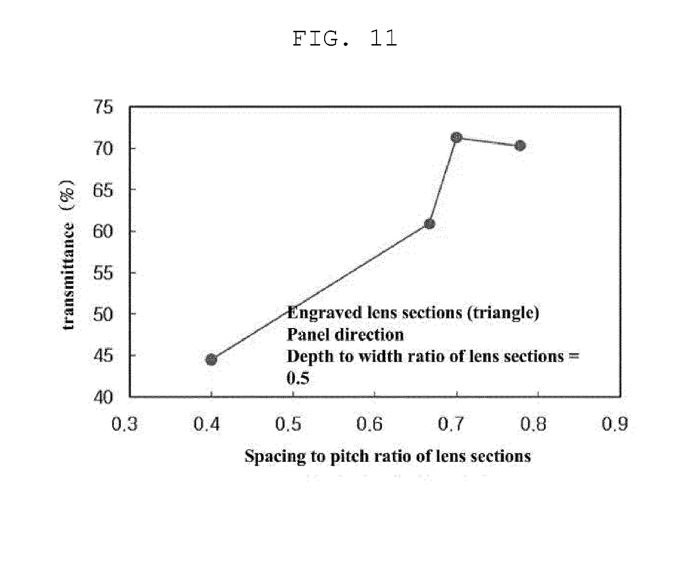

FIG. 11 is a view showing the relationship between the spacing to pitch ratio of the lens sections and transmittance;

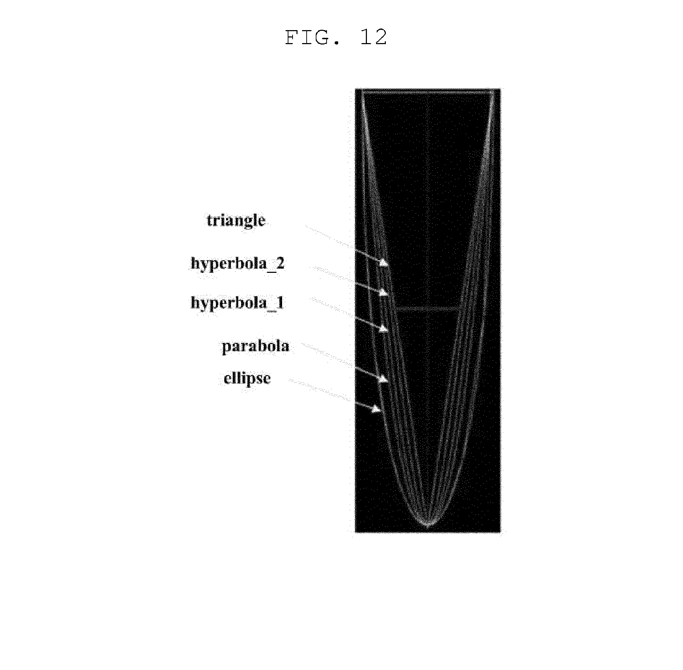

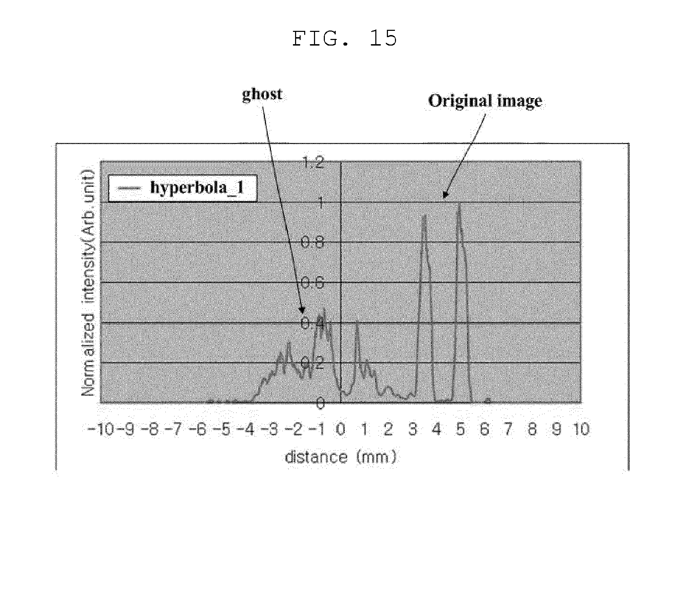

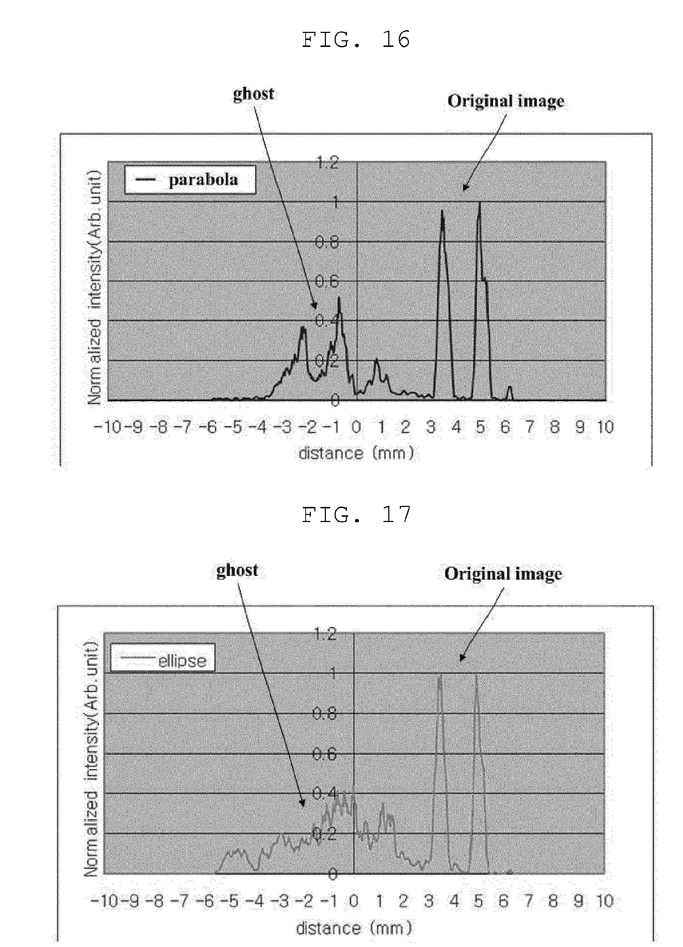

FIG. 12 to FIG. 17 are views showing the relationship between the cross-sectional shape of the lens sections and ghosts;

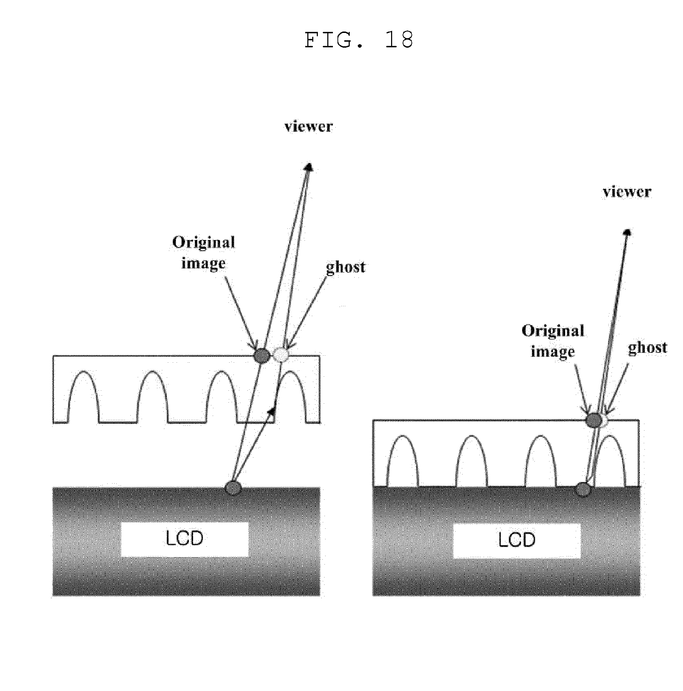

FIG 18 to FIG 23 are views showing that ghosts and hazing can be prevented by disposing an optical film for reducing color shift according to a comparative example such that it is in close contact with a display panel;

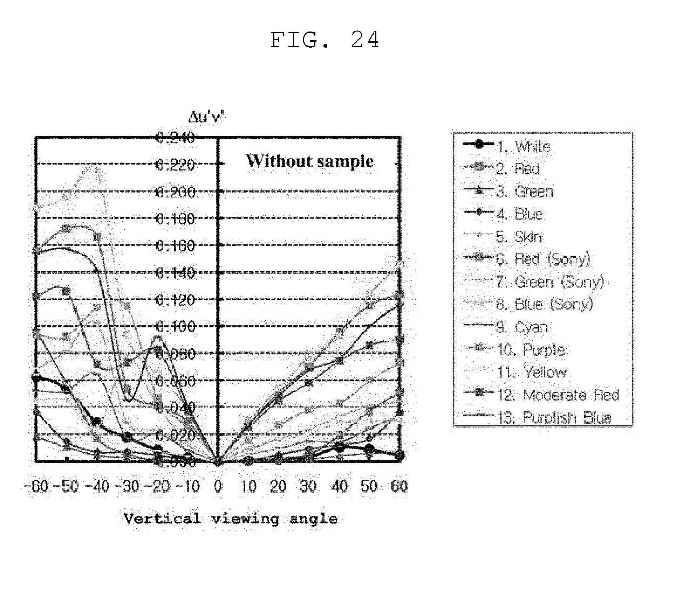

FIG 24 to FIG 27 are graphs showing that an optical film for reducing color shift according to a comparative example reduces color shift, grayscale inversion and gamma-curve distortion in an LCD monitor (model number: B2440MH) that employs a CCFL BLU and a twisted nematic (TN) panel;

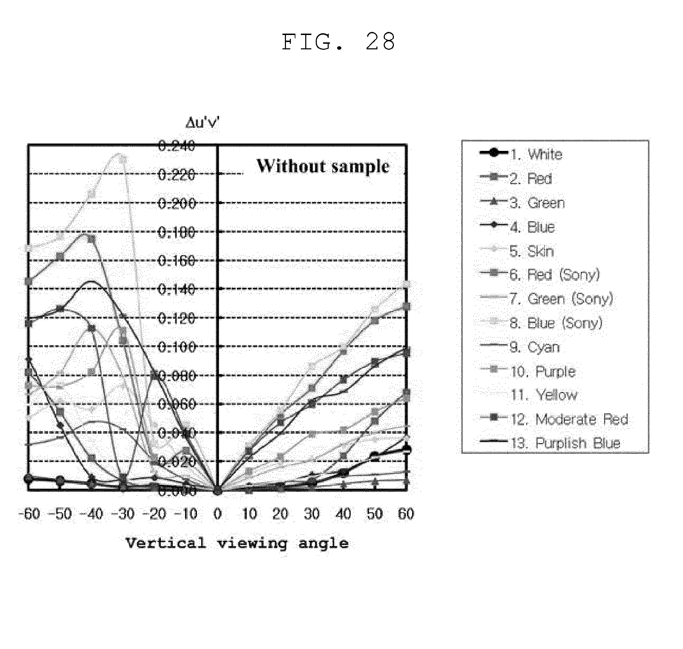

FIG 28 to 31 are graphs showing that an optical film for reducing color shift according to a comparative example reduces color shift, grayscale inversion and gamma-curve distortion in an LCD monitor (model number: BX2440) that employs an LED BLU and a TN panel;

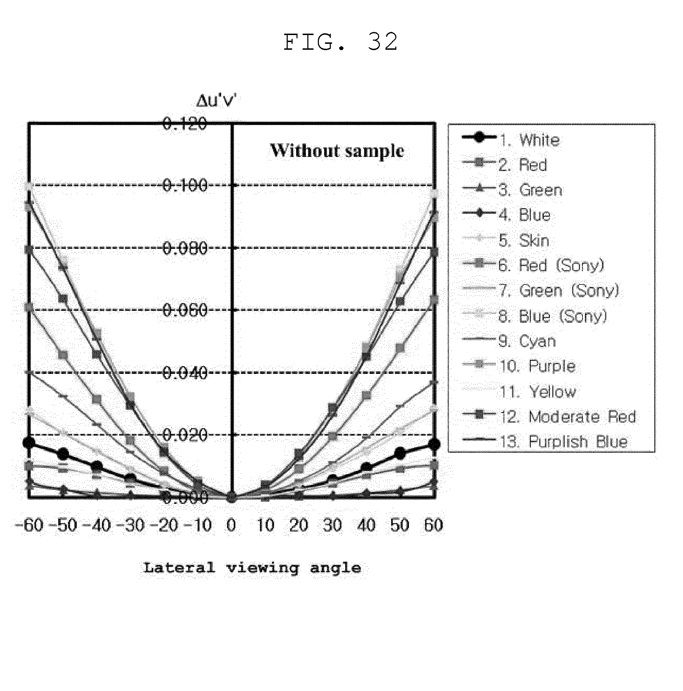

FIG. 32 to FIG. 35 are graphs showing that an optical film for reducing color shift according to a comparative example reduces color shift and gamma-curve distortion in a 46" LCD TV (model number: LH46CSPLBC) that employs an S-patterned vertical alignment (S-PVA) panel;

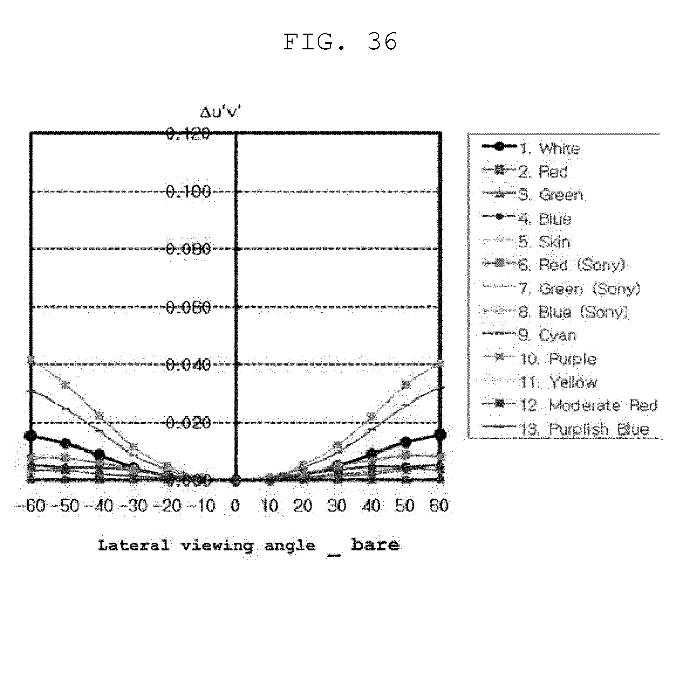

FIG 36 is a graph showing color shift in an S-IPS mode LCD TV without an optical film for reducing color shift according to a comparative example;

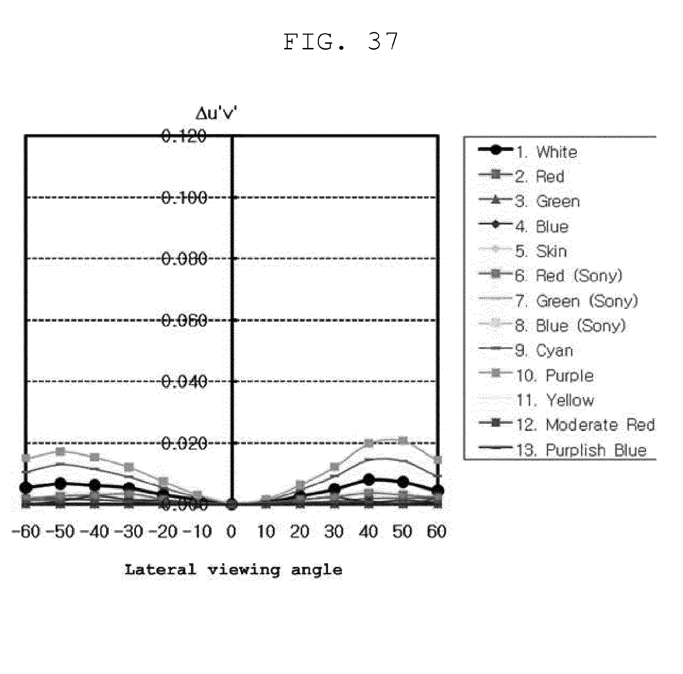

FIG 37 is a graph showing the result obtained by attaching an adhesive optical film for reducing color shift according to a comparative example to the display panel in the LCD TV of FIG. 36 and then measuring the rate of color shift reduction;

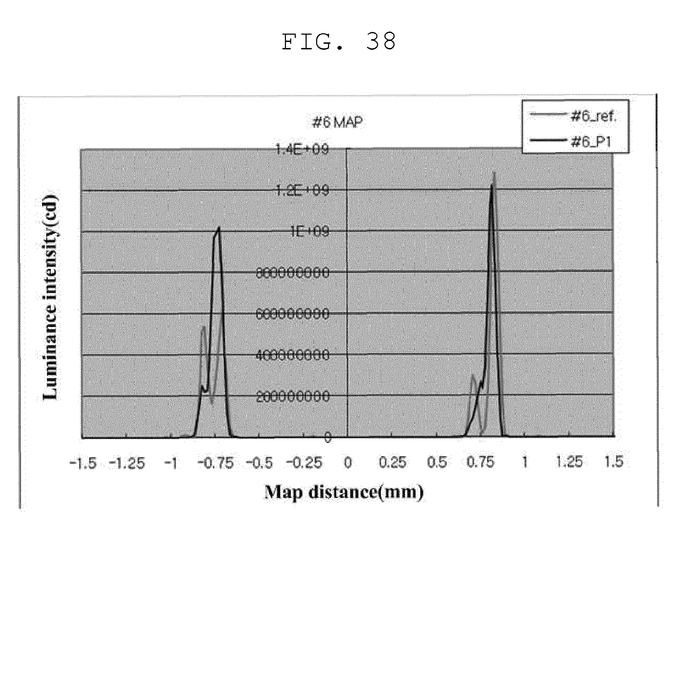

FIG. 38 to FIG 40 are views showing the relationship between the size of the lens sections and ghosting; and

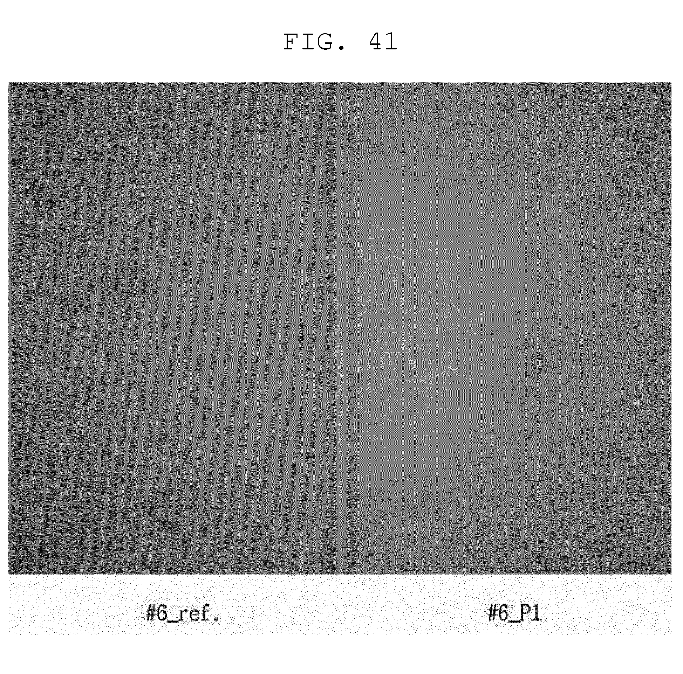

FIG 41 is a view showing the relationship between the size of the lens sections and a moiré phenomenon; and

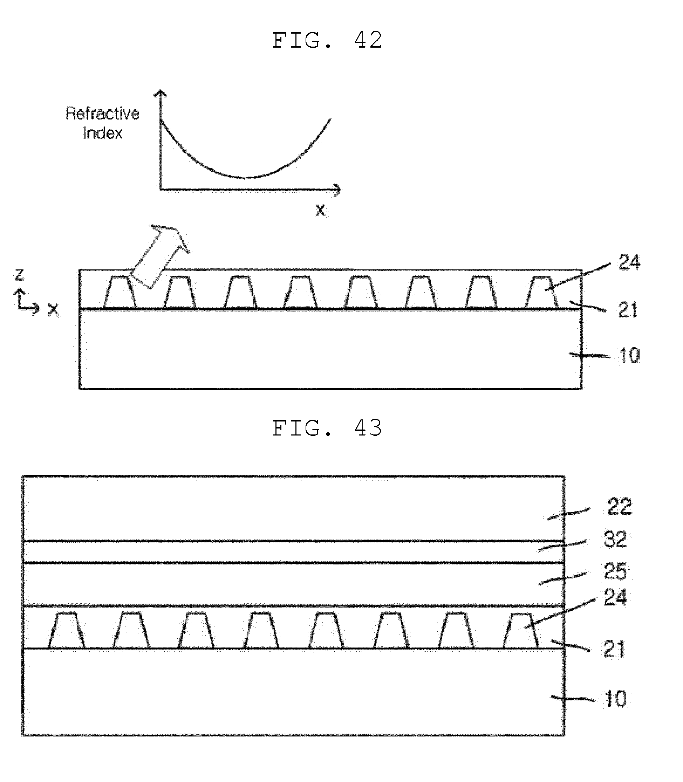

FIG 42 to FIG. 45 are views pertaining to exemplary embodiments of the invention, in which

FIG. 42 to FIG. 44 are views schematically showing LCDs according to exemplary embodiments of the invention; and

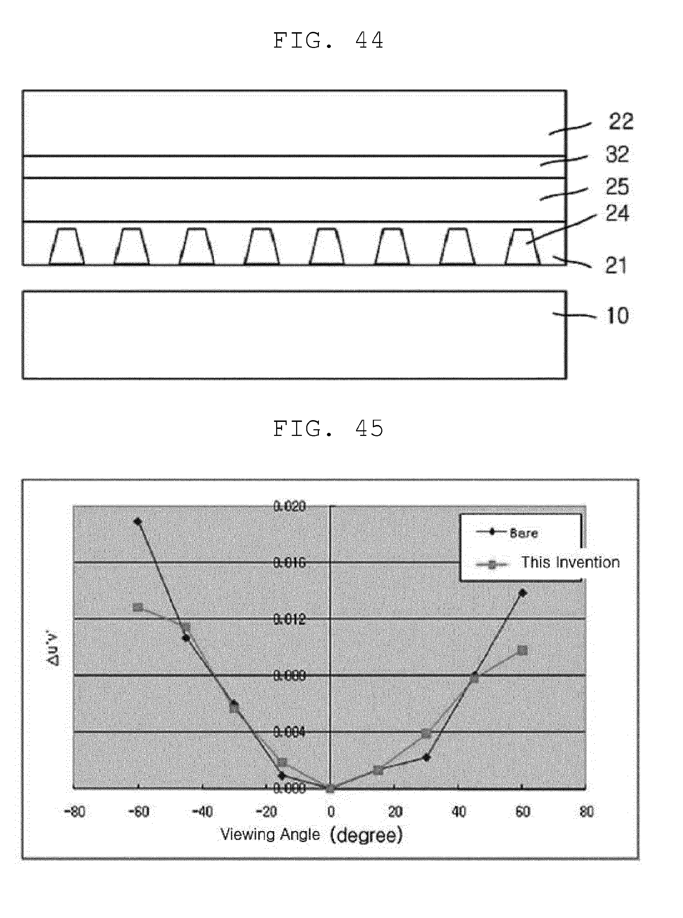

FIG 45 is a view showing the color shift-reducing effect of an LCD according to an exemplary embodiment of the invention.

### DETAILED DESCRIPTION OF THE INVENTION

Reference will now be made in detail to various embodiments of the present invention, examples of which are illustrated in the accompanying drawings and described below. While the invention will be described in conjunction with exemplary embodiments thereof, it is to be understood that the present description is not intended to limit the invention to those exemplary embodiments. On the contrary, the invention is intended to cover not only the exemplary embodiments, but also various alternatives, modifications, equivalents and other embodiments that may be included within the scope of the invention as defined by the appended claims.

### Comparative examples

A description will be given below of comparative examples. The principle by which color shift is reduced in the present invention is described first, followed by a description of the mechanism by which ghosts and hazing are prevented using an optical film for reducing color shift. How the optical film for reducing color shift is effective for reducing gamma-curve distortion and grayscale inversion is also described.

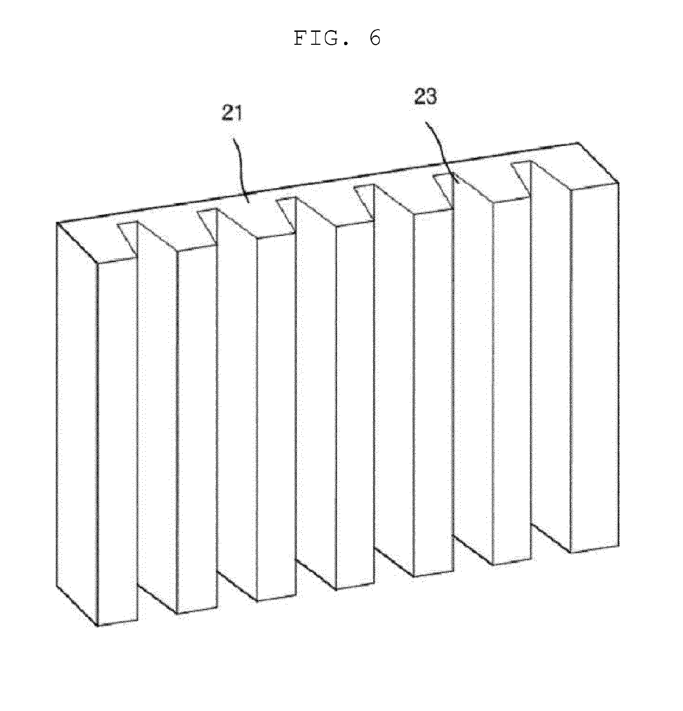

FIG. 5 and FIG. 6 are cross-sectional views showing an optical film for reducing color shift according to comparative examples.

The optical film for reducing color shift shown in FIG. 5 is typically disposed in front of a display panel 10.

As shown in the figures, the optical film 20 includes a background layer 21 and lens sections 23.

The background layer 21 is formed as a layer of a light-transmitting material. The background layer 21 may be made of a transparent polymer resin, in particular, ultraviolet (UV)-curable transparent resin.

The lens sections 23 are formed by engraving or embossing the background layer 21 to a predetermined depth or height. The lens sections 23 reduce color shift by refracting light that is incident thereon. The lens sections 23 can reduce the color change that occurs in response to an increase in the viewing angle using a color mixing effect. It is possible to allow more of the light that is emitted in the direction perpendicular to the plane of the display panel to pass through by reducing the width of the lens sections such that it is smaller than the spacing between the lens sections.

The lens sections serve to change the direction of the portion of light that is emitted perpendicular to the plane of the display panel such that it is not perpendicular thereto, and to change the direction of the portion of light that is not originally emitted perpendicular thereto such that it is emitted perpendicular thereto. That is, the lens sections can cause color mixing by changing the direction of light depending on the viewing angle, thereby reducing color shift.

The lens sections 23 may have a pattern selected from among, but not limited to, stripes having a polygonal cross-section, waves having a polygonal cross-section, a matrix having a polygonal cross-section, a honeycomb having a polygonal cross-section, dots having a polygonal cross-section, concentric circles having a polygonal cross-section, stripes having a semicircular cross-section, waves having a semicircular cross-section, a matrix having a semicircular cross-section, a honeycomb having a semicircular cross-section, dots having a semicircular cross-section, concentric circles having a semicircular cross-section, stripes having a semi-elliptical cross-section, waves having a semi-elliptical cross-section, a matrix having a semi-elliptical cross-section, a honeycomb having a semi-elliptical cross-section, dots having a semi-elliptical cross-section, concentric circles having a semi-elliptical cross-section, stripes having a semi-oval cross-section, waves having a semi-oval cross-section, a matrix having a semi-oval cross-section, a honeycomb having a semi-oval cross-section, dots having a semi-oval cross-section, and concentric circles having a semi-oval cross-section.

Here, the term "polygonal cross-section" may include, but is not limited to, triangular, trapezoidal and quadrangular cross-sections. In addition, the term "semi-oval cross-section" may include curved profiles other than an arc of a circle and an arc of an ellipse. Further, the terms "semicircular cross-section," "semi-elliptical cross-section," and "semi-oval cross-section" are not limited to the shapes that are obtained by dividing circular, elliptical, or oval shapes precisely into two sections, but include shapes in which part of the outline of the cross-section of the lens sections includes an arc, an elliptical arc, or a parabola. That is, the "semi-elliptical cross-section" may have a shape that has two elliptical arc lateral sides and a linear bottom.

The optical film for reducing color shift of the comparative examples is not limited to the above-described shapes, but may have a variety of other shapes. A shape that has a laterally symmetrical cross-section is preferable.

In an example, the pattern comprising stripes may also include a variety of patterns, such as a horizontal stripe pattern, a vertical stripe pattern, and the like. The horizontal stripe pattern is effective in compensating for vertical viewing angles. The vertical stripe pattern, as shown in FIG. 6, is effective in compensating for horizontal viewing angles.

In order to prevent a moiré phenomenon, the lens sections 23 may be formed to have a predetermined bias angle with respect to the edge of the background layer 21. For example, in the stripe pattern, the stripes may have a predetermined angle of inclination with respect to the horizontal or vertical direction.

It is preferred that the lens sections 23 be periodically formed on one surface of the background layer 21, as shown in FIG. 6. The lens sections 23 are spaced apart from each other and are parallel to each other.

Although the lens sections are formed in the rear surface of the background layer that faces the display panel, they may be formed in the front surface of the background layer that faces the viewer. In addition, the lens sections may be formed in both surfaces of the background layer.

Here, a plurality of lens sections is formed. This means that the lens sections are spaced apart from each other on the cross-section of the optical film, and that a flat surface of the background layer, which allows light to pass through, is present between adjacent lens sections. Accordingly, the lens sections having the pattern of a matrix having a semi-elliptical cross-section appear as a single lens structure having a matrix pattern when they are viewed from the viewer's side, whereas the lens sections appear to be spaced apart from each other when viewing the cross-section of the optical film. Therefore, this structure corresponds to the lens sections of the invention.

FIG. 8 is a view showing a method of manufacturing an optical film according to a comparative example.

A background layer 21 may be formed on a backing 25.

The backing 25 is, preferably, a transparent resin film or a glass substrate that is UV transparent. Available examples of material for the backing may include, but are not limited to, polyethylene terephthalate (PET), polycarbonate (PC), polyvinyl chloride (PVC) and triacetate cellulose (TAC). The refractive index of the backing is preferably the same as that of the background layer, but the invention is not limited thereto.

A method of preparing the lens sections 23 includes the step of applying a UV-curable resin on one surface of the backing 25, and the step of forming engraved recesses in the UV-curable resin using a forming roll that has a pattern that is the reverse of that of the lens sections on the surface thereof while radiating UV rays onto the UV-curable resin. Afterwards, the preparation of the background layer 21 having the lens sections 23 is finalized by radiating UV rays onto the UV-curable resin.

However, the optical film for reducing color shift of comparative examples is not limited thereto, and the recesses of the background layer may be formed using a variety of methods, such as thermal pressing, which uses thermoplastic resin, injection molding, in which thermoplastic resin or thermosetting resin is injected, or the like.

FIG. 9 is a view showing the relationship between the depth (D) to width (W) ratio of the lens sections and the rate of color shift reduction.

The degree of color shift Δu'v' that is discernible with the human eye is 0.004 or greater. The S-IPS display panel having the best color shift characteristics exhibits a maximum color shift Δu'v' of 0.02 at viewing angles ranging from 0 degrees to 60 degrees. Therefore, the magnitude of color shift reduction is required to be 20% or greater (that is, the maximum Δu'v' is required to be 0.016 or less) in order to attain a reduction in color shift that is discernible with the human eye. It can be appreciated from the graph of FIG. 9 that the depth-to-width ratio of the lens sections is required to be 0.25 or less in order for the color shift reduction to be 20% or greater. In addition, if the depth to width ratio of the lens sections exceeds 6, it will be impossible to manufacture the film using common methods for forming lens sections. Therefore, the depth to width ratio of the lens sections is required to be 6 or less.

FIG. 10 is a view showing the relationship between the spacing (C) to pitch (P) ratio of the lens sections and the rate of color shift reduction.

Likewise, from the graph of FIG. 10, the spacing-to-pitch ratio of the lens sections is required to be 0.95 or less in order for the color shift reduction to be 20% or greater.

FIG. 11 is a view showing the relationship between the spacing (C) to pitch (P) ratio of the lens sections and transmittance.

As shown in the graph of FIG. 11, the greater the spacing-to-pitch ratio of the lens sections, the greater the light transmittance of the film. A film having a light transmittance of 50% or greater is viable as a commercial product. Accordingly, the spacing-to-pitch ratio of the lens sections is required to be 0.5 or greater in order for the transmittance to be 50% or greater.

Therefore, the graphs shown in FIG. 10 and FIG. 11 show that the spacing-to-pitch ratio of the lens sections is preferably in the range from 0.5 to 0.95.

FIG. 12 to FIG. 17 are views showing the relationship between the cross-sectional shape of the lens sections and ghosts.

As shown in FIG 12, the occurrence of a ghost was observed while the curvature of the lens sections (having a width of 27µm, a depth of 81 µm and a pitch of 90µm) was varied. It can be appreciated that lens sections having a semi-elliptical cross section prevent the ghost most effectively.

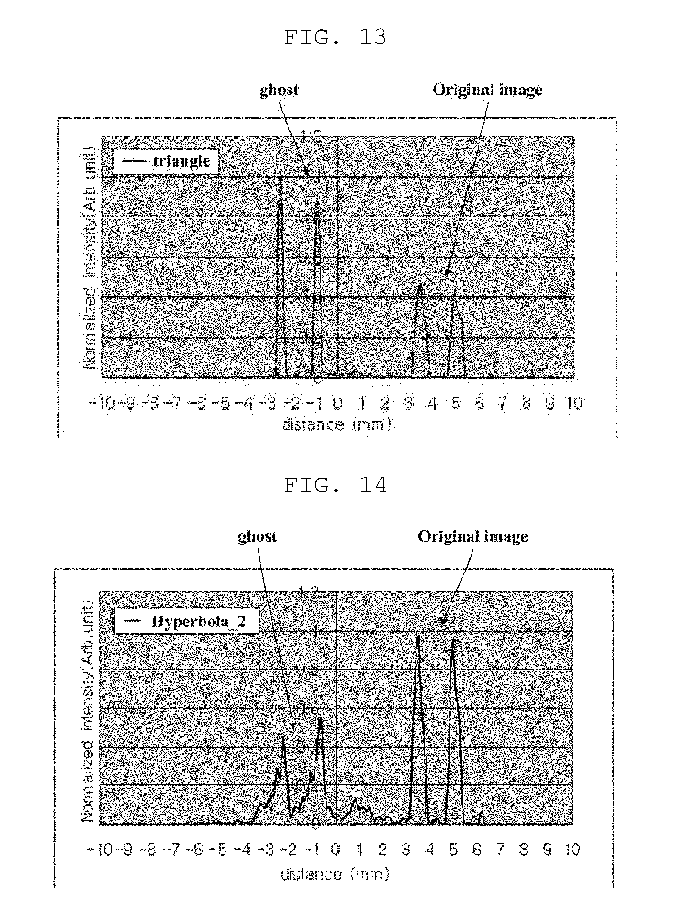

The ghost (false image) is observed more distinctly as the shape is changed from a semi-elliptical shape to a triangular shape, that is, as the curvature decreases. FIG. 13 to FIG 17 are graphs showing the luminance distributions of ghosts compared with those of original images.

FIG 18 to FIG. 20 are views showing that ghosts and hazing occur when an optical film for reducing color shift is spaced apart from a display panel.

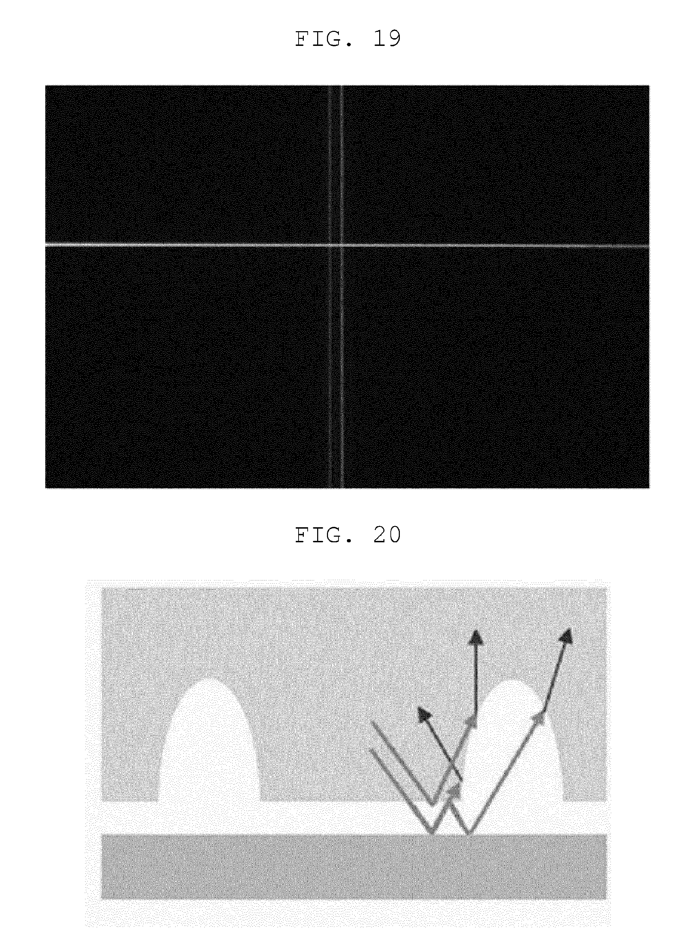

When the optical film for reducing color shift according to a comparative example is mounted in front of the display panel, spacing the optical film for reducing color shift farther apart from the display panel makes the ghost appear more distinct, as shown in FIG. 18. FIG 19 is a view showing that a ghost occurs when the optical film for reducing color shift is disposed such that it is spaced apart from the display panel. The ghost distorts the image on the display panel. Therefore, a solution that can reduce color shift without creating a ghost is required.

In addition, when the optical film for reducing color shift is provided such that it is spaced apart from the display panel, not only the foregoing problem of ghosts, but also the problem of haze occurs, as shown in FIG 20, since the lens sections diffuse light reflected from the display panel and the flat surfaces between the lens sections. That is, light incident onto the optical film for reducing color shift and the display panel is reflected, one or multiple times, from the interface between the optical film for reducing color shift and the air (i.e. the air between the optical film for reducing color shift and the display panel) and from the interface between the air and the display panel, and is then incident onto the lens sections. This phenomenon reduces the bright-room contrast ratio (BRCR), thereby reducing the visibility of the display device. Therefore, a solution that can prevent ghosts and hazing from occurring in the optical film for reducing color shift is required.

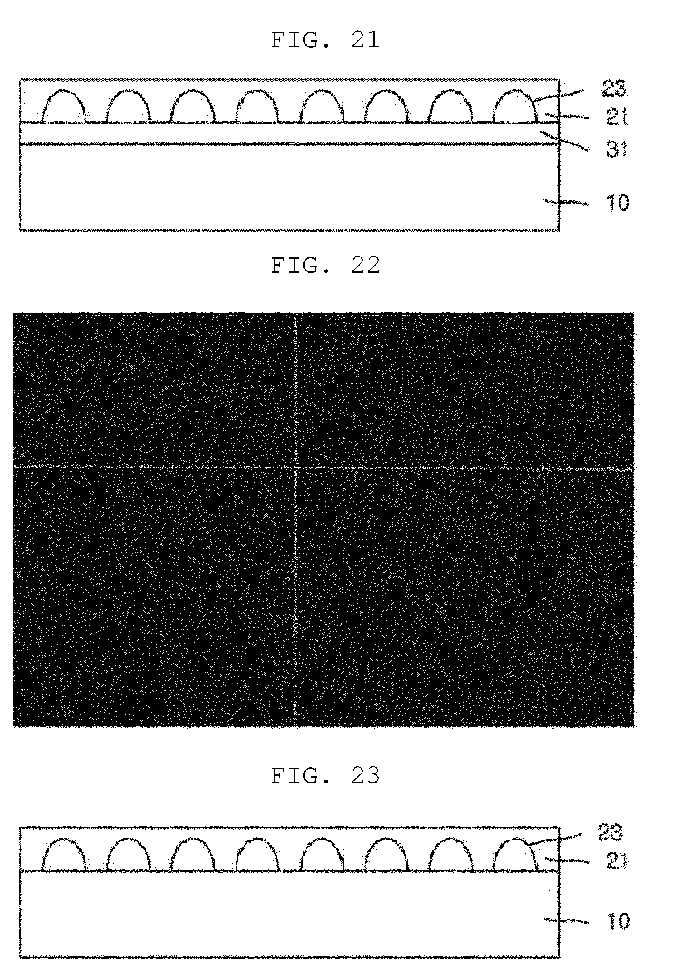

FIG. 21 to FIG. 23 are views showing a solution for removing ghosts and hazing in the optical film for reducing color shift according to comparative examples. FIG. 21 is a view schematically showing a display device according to a comparative example, FIG 22 is a view showing that ghosts have been eliminated from the display device shown in FIG. 21, and FIG 23 is a view schematically showing a display device according to a comparative example.

It is possible to remove ghosts and hazing by bringing the optical film for reducing color shift into close contact with the display panel. For example, it is possible to prevent ghosts and hazing and improve transmittance by attaching the optical film for reducing color shift to the display panel via an adhesive 31, as shown in FIG. 21, or by forming a background layer of a material having an adhesive property in itself such that the background layer is directly attached to the display panel, as shown in FIG 23. In addition, it is also possible to simply bring the optical film for reducing color shift into close contact with the display panel without adhering it thereto such that no air gap is interposed between the optical film for reducing color shift and the display panel. When the optical film for reducing color shift is in close contact with the display panel, it is difficult to distinguish the ghost from the original image because the gap between the ghost and the original image is very small.

Here, it is also preferable that the lens sections be directed toward the display panel instead of toward the viewer, in the interest of reducing hazing. (This is the same when the optical film for reducing color shift is spaced apart from the display panel.)

Here, the adhesive background layer may be made of UV-curable transparent elastomer such that it can be easily attached directly to the display panel. Available materials for the background layer may include, but are not limited to, acrylic elastomer, silicone-based elastomer (polydimethylsiloxane: PDMS), urethane-based elastomer, polyvinyl butyral (PMB) elastomer, ethylene vinyl acetate (EVA)-based elastomer, polyvinyl ether (PVE)-based elastomer, saturated amorphous polyester-based elastomer, melamine resin-based elastomer, and the like.

Table 1 below presents the results obtained by measuring hazing in a display device in which the optical film for reducing color shift is spaced apart from the display panel, and in the display device shown in FIG. 21.

**Table 1**

| Sample | Luminance measured at a viewing angle of 60° |
|---|---|
| Black panel | 1.73 nit |
| Display panel/Air/Film having lens sections with semi-elliptical cross-section | 12.27 nit |
| Display panel/PSA/Film having lens sections with semi-elliptical cross-section | 2.58 nit |
| Display panel/Air/PET film | 3.87 nit |

Measurement was carried out using illuminant D65, having 240 lux as an external light source by attaching the samples to black substrates and then measuring the luminance of reflected light at a horizontal viewing angle of 60º. Since the external light source exists at a place higher than the samples, specular reflections could be observed from below the samples, and irregular reflections could be observed from all directions. Therefore, the reflection hazing caused by external light was measured by detecting irregularly reflected light at a horizontal viewing angle of 60º, rather than from below the samples.

When the optical film for reducing color shift was adhered (or directly attached) to the display panel, the reflection haze was measured to be 2.58nit, which is very small compared to when the optical film for reducing color shift was spaced apart from the display panel to thus form an air gap therebetween. It can be appreciated that the reflection hazing was significantly reduced even in comparison with the case in which the simple PET film without the lens sections was used.

FIG 24 to FIG 27 are views showing that an optical film for reducing color shift according to a comparative example reduces color shift, grayscale inversion and gamma-curve distortion in an LCD monitor (model number: B2440MH) that employs a CCFL BLU and a twisted nematic (TN) panel.

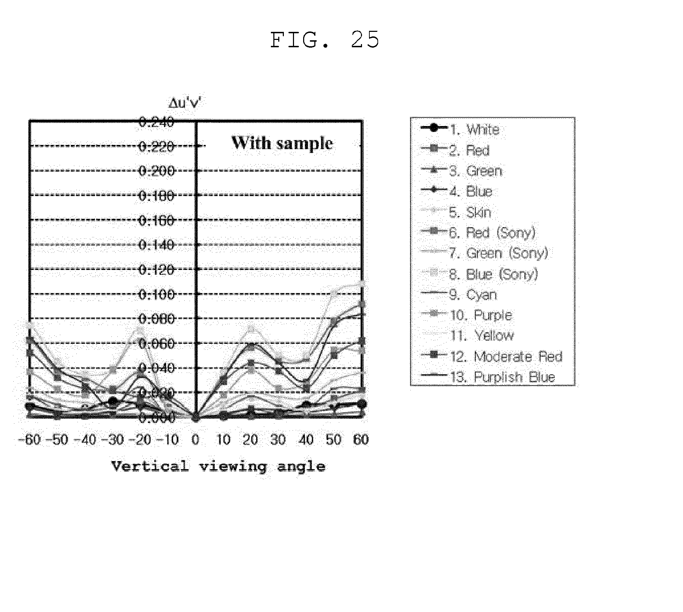

In order to measure the degree of color shift reduction, an SS320 goniometer was used as a measuring device. FIG. 24 was obtained by measuring color coordinates at vertical viewing angles ranging from 0 to 60° at an interval of 10° and then converting the color coordinates into color shift. FIG 25 was obtained by directly attaching a sample of an optical film for reducing color shift to the display panel and then measuring and converting in the same manner. As can be seen, the ratios of color shift reduction were 25.5% (up) and 65.4% (down).

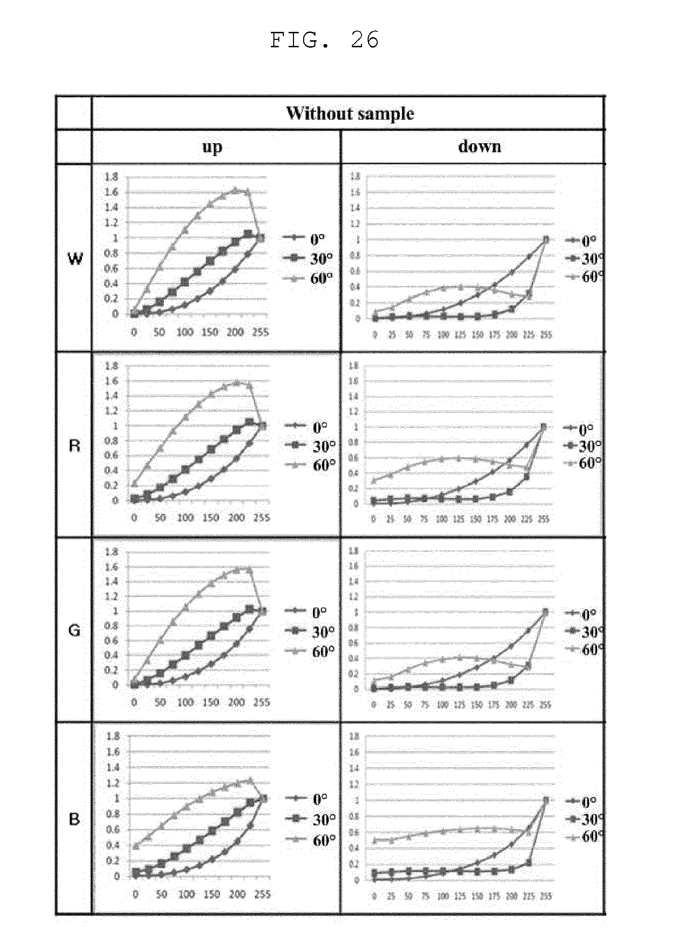

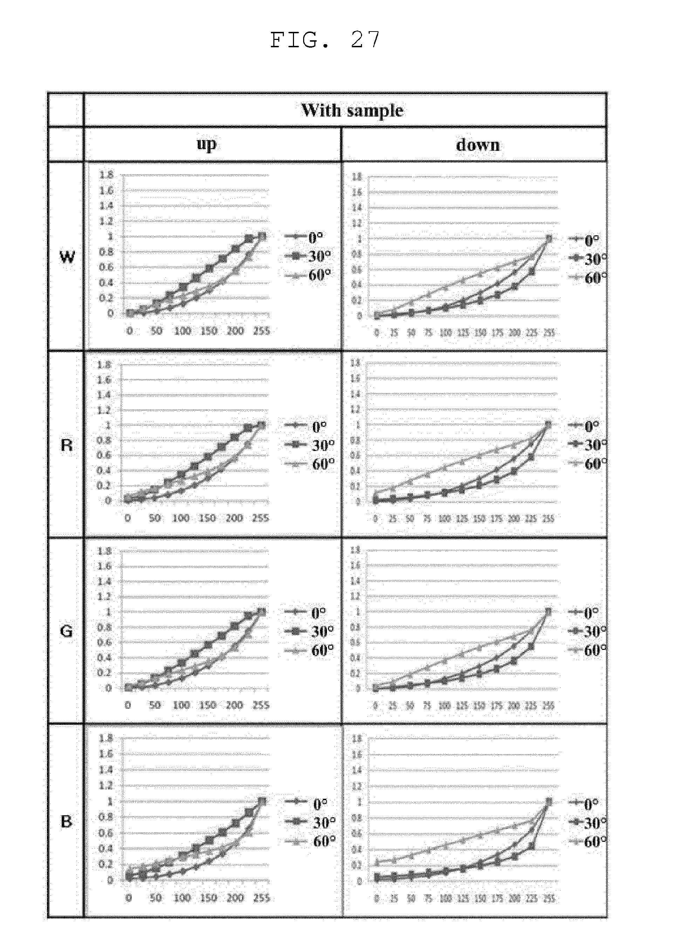

In order to measure the degree of reduction in grayscale inversion and gamma-curve distortion, a CS-1000 was used as a measuring device. FIG. 26 was obtained by measuring luminance with respect to gray levels of W, R, G and B at vertical viewing angles of 0° (the front), 30° and 60°. FIG 27 was obtained by directly attaching a sample of an optical film for reducing color shift to the display panel and then measuring in the same manner. As can be seen, when the optical film for reducing color shift was used, grayscale inversion was reduced as a result of the recovery of gamma-curve linearity, the difference between gamma-curves depending on the angle was significantly decreased, and gamma-curve distortion was decreased.

FIG. 28 to 31 are views showing that an optical film for reducing color shift according to a comparative example reduces color shift, grayscale inversion and gamma-curve distortion in an LCD monitor (model number: BX2440) that employs an LED BLU and a TN panel

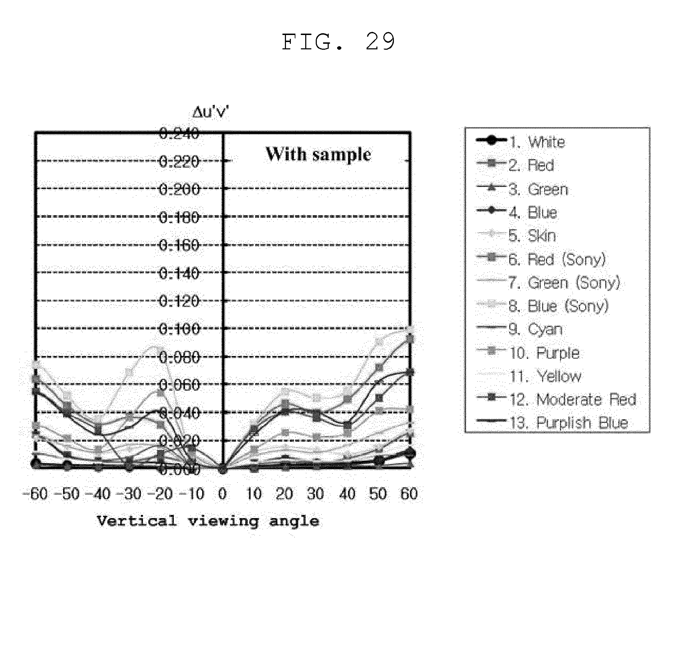

In order to measure the degree of color shift reduction, an SS320 goniometer was used as a measuring device. FIG 28was obtained by measuring color coordinates at vertical viewing angles ranging from 0 to 60° at an interval of 10° and then converting the color coordinates into color shift. FIG 29 was obtained by directly attaching a sample of an optical film for reducing color shift to the display panel and then measuring and converting in the same manner. As can be seen, the ratios of color shift reduction were 30.9% (up) and 63.5% (down).

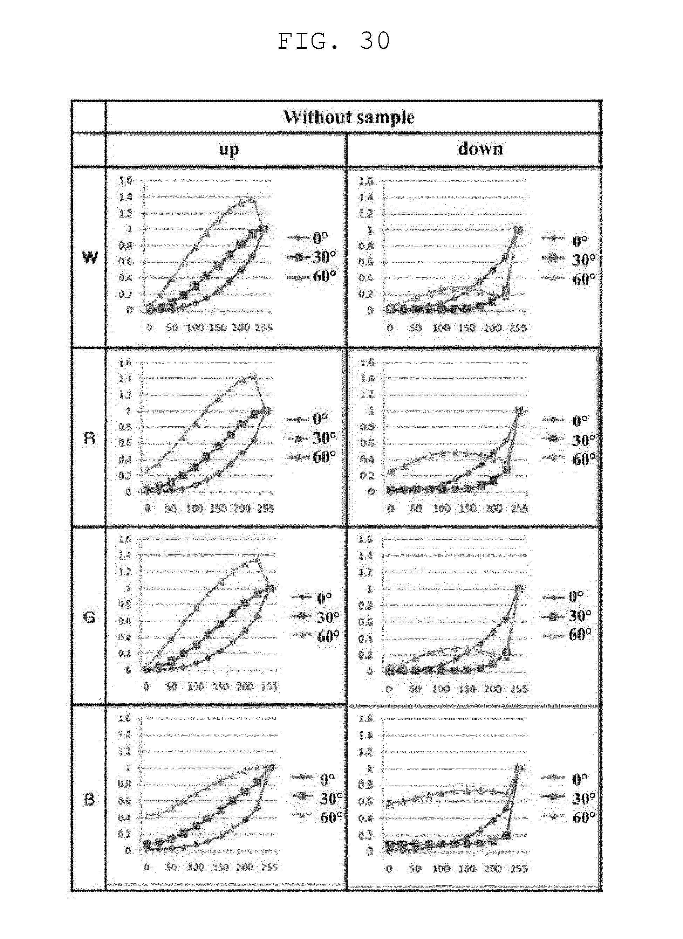

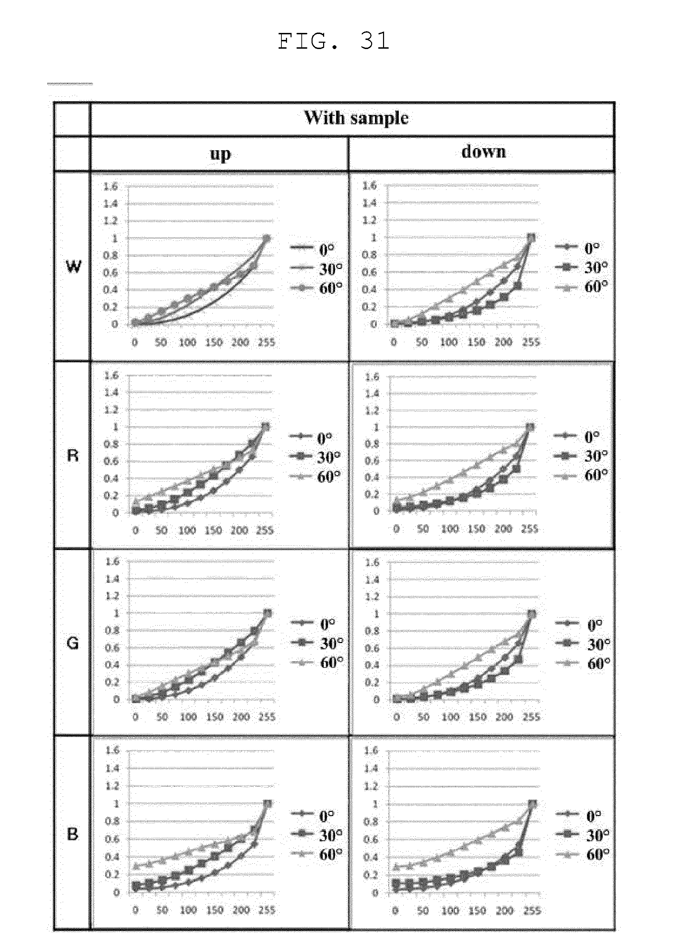

In order to measure the degree of reduction in grayscale inversion and gamma-curve distortion, a CS-1000 was used as a measuring device. FIG. 30 was obtained by measuring luminance with respect to gray levels of W, R, G and B at vertical viewing angles of 0°, 30° and 60°. FIG 31 was obtained by directly attaching a sample of an optical film for reducing color shift to the display panel and then measuring in the same manner. As can be seen, when the optical film for reducing color shift was used, grayscale inversion was reduced as a result of the recovery of gamma-curve linearity, the difference between gamma-curves depending on the angle was significantly decreased, and gamma-curve distortion was decreased.

FIG 32 to FIG 35 are views showing that an optical film for reducing color shift according to a comparative example reduces color shift and gamma-curve distortion in a 46" LCD TV (model number: LH46CSPLBC) that employs an S-patterned vertical alignment (S-PVA) panel.

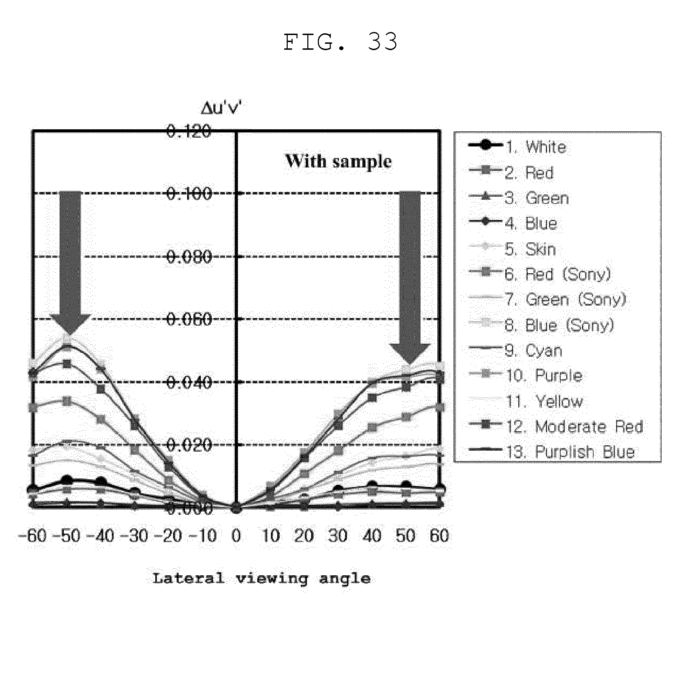

In order to measure the degree of color shift reduction, an SS320 goniometer was used as a measuring device. FIG. 32 was obtained by measuring color coordinates at horizontal viewing angles ranging from 0 to 60° at an interval of 10° and then converting the color coordinates into color shift. FIG 33 was obtained by directly attaching a sample of an optical film for reducing color shift to the display panel and then measuring and converting in the same manner. As can be seen, the ratios of color shift reduction were 48.7% (left) and 53.7% (right).

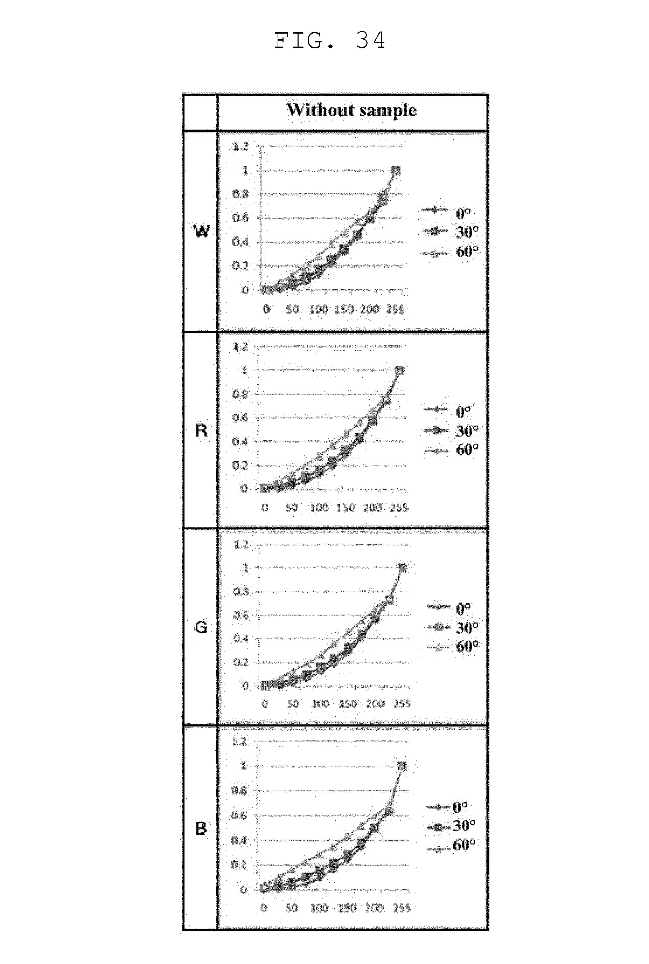

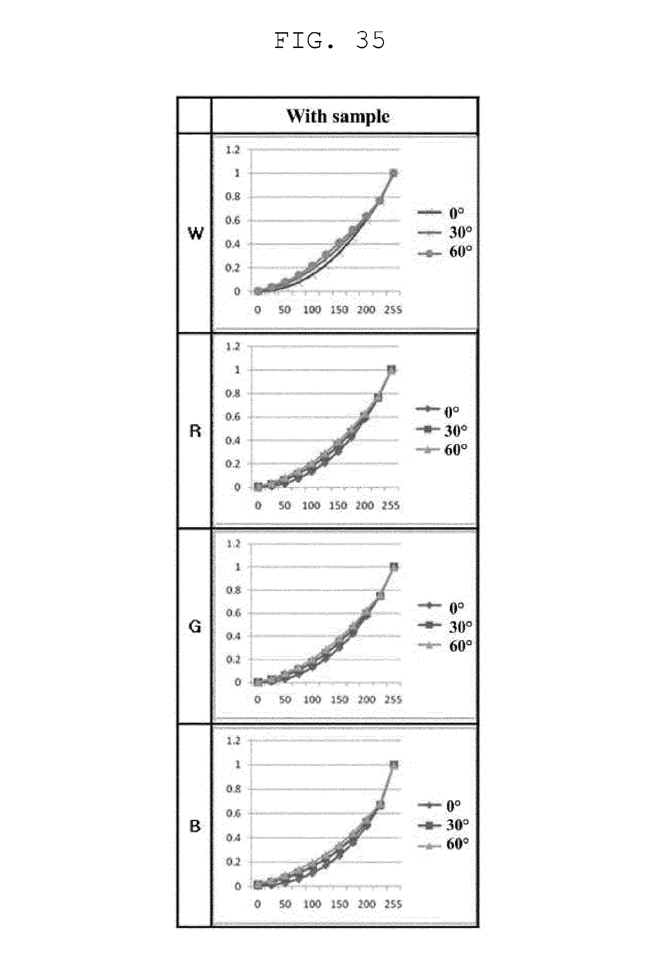

In order to measure the degree of reduction in gamma-curve distortion, a CS-1 000 was used as a measuring device. FIG. 34 was obtained by measuring luminance with respect to gray levels of W, R, G and B at left horizontal viewing angles of 0°, 30° and 60°. FIG. 35 was obtained by directly attaching a sample of an optical film for reducing color shift to the display panel and then measuring in the same manner. As can be seen, when the optical film for reducing color shift was used, the difference between gamma-curves depending on the angle was significantly decreased.

FIG. 36 is a view showing color shift in an S-IPS mode LCD TV without an optical film for reducing color shift according to a comparative example. FIG 37 is a view showing the result obtained by attaching an adhesive optical film for reducing color shift according to a comparative example (in which lens sections have a semielliptical cross section with a width of 30µm, a depth of 60µm and a pitch of 83µm) to the display panel in the LCD TV of FIG. 30 and then measuring the rate of color shift reduction. The color shift reduction was 50%.

FIG. 38 to FIG. 40 are views showing the relationship between the size of the lens sections and ghosting, and FIG 41 is a view showing the relationship between the size of the lens sections and a moire phenomenon.

It is possible to prevent ghosting in the optical film for reducing color shift by directly attaching the optical film for reducing color shift, in which the lens sections thereof have a pitch of 45µm or less, to the display panel. It is preferred that the lens sections have a pitch of 45µm or less while satisfying both the depth to width ratio and the spacing to pitch ratio described above. If the pitch of the lens sections is less than 0.01 µm, the effect of the lens sections is insignificant, since they act like a thin film that has a refractive index midway between the refractive index of the optical film and the refractive index of the air rather than realizing the above-described color mixing due to reflection, refraction, and scattering of light. Therefore, it is preferred that the pitch of the lens sections be 0.01 µm or greater.

Table 2 below presents the sizes of lens sections of respective samples. Here, the lens sections have the same depth to width ratio and the same spacing to pitch ratio.

Table 2

| Sample | Width (µm) | Depth (µm) | Pitch (µm) |
|---|---|---|---|
| #6_ref. | 20 | 62.5 | 90 |
| #6_P1 | 10 | 31.25 | 45 |
| #6_P2 | 6 | 18.75 | 27 |
| #6_P3 | 4 | 12.5 | 18 |

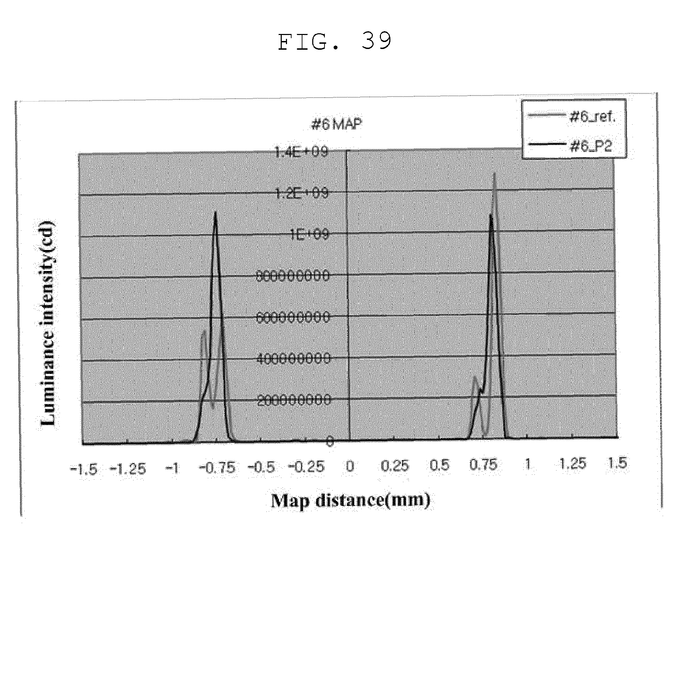

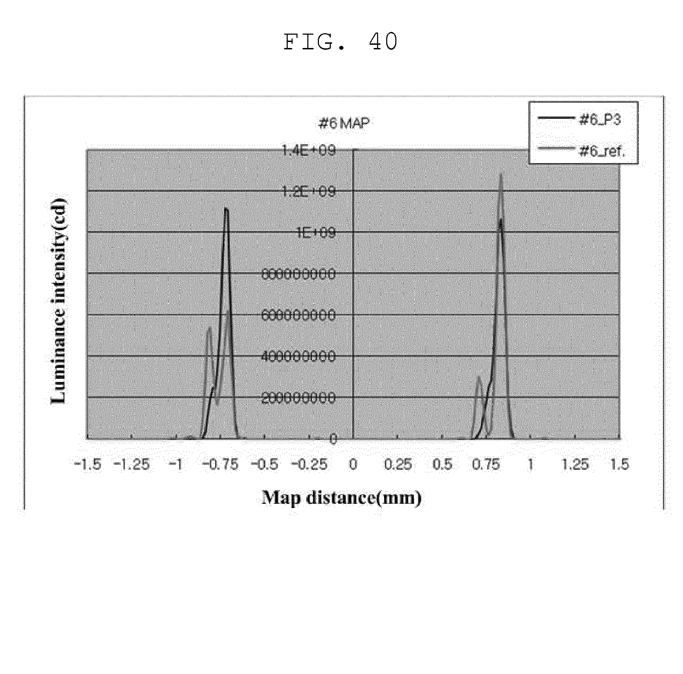

FIG 38 to FIG 40 show the result obtained by measuring the luminance of circular images along a line that passes through the center thereof. As shown in the figures, Sample #6_ref. exhibits two peaks at two intersecting points where the line that passes through the center meets the image. In contrast, it can be appreciated that the ghosting gradually decreases in the order of Sample #6_P1 of FIG. 38, Sample #6_P2 of FIG 39, and Sample #6_P3 of FIG. 40.

In addition, as shown in FIG 41, a moiré phenomenon occurs in Sample #6_ref., but does not occur in Sample #6_P1.

### Embodiments of the Invention

From the above, it can be appreciated that the color shift was greatly reduced by disposing the optical film for reducing color shift of the comparative examples in front of the display panel. It was also possible to reduce gamma-curve distortion and grayscale inversion. Furthermore, the problems of ghosts and hazing were overcome by disposing the optical film for reducing color shift such that it is in close contact with the front portion of the display panel.

The features for reducing color shift and grayscale inversion and the features for preventing ghosts and hazing in the comparative examples are also essential to the invention. In addition to these features, the invention proposes an additional solution to further solve the problems, including i) a decrease in the sharpness and a decrease in the bright-room contrast ratio (BRCR) of the quality of an image, and ii) an increase in ghosting, by introducing the concept of gradient index.

FIG. 42 to FIG. 44 are views schematically showing LCDs according to exemplary embodiments of the invention.

As shown in FIG. 42, the LCD of the invention includes a display panel 10 and an optical film for reducing color shift.

The optical film for reducing color shift is typically disposed in front of the display panel 10. However, the present invention is not limited thereto. For example, the optical film for reducing color shift may be positioned inside the display panel, in front of a liquid crystal layer.

The optical film includes a background layer 21 and lens sections 24 spaced apart from each other. Light emitted from the liquid crystal layer has different colors depending on a viewing angle and a grayscale level owing to the birefringence characteristics of the liquid crystal layer. The optical film diffuses a portion of the light incident onto the lens sections so that the portion of the light is mixed with another portion of the light passing between adjacent lens sections.

The refractive index of the lens sections and the refractive index of the background layer have a gradient that shows a gradual change from the refractive index of the lens sections into the refractive index of the background layer. Although the term "gradual" preferably means a continuous change, this is not intended to be limiting. A discontinuous change is also possible. In this case, the size of n, which will be described later, is preferably 3 or greater, and more preferably 4 or greater. Since the change is more similar to a continuous change when the size of n is greater, the greater size of n may be more preferable.

The refractive index of the lens sections may have a one-dimensional gradient along the width direction (x direction). In an example, when a portion of the background layer that is adjacent to a lens section is referred to as a 1 B portion, a portion of the lens section that is adjacent to the 1 B portion is referred to as a 1 L portion, and a portion of the lens section that is farther apart from the 1 B portion than the 1 L portion is referred to as an nL portion, the refractive index of the 1 L portion may be more similar to the refractive index of the 1 B portion than the refractive index of the nL portion.

Here, n may a natural number of 2 or greater. In an example, when n is 2, the central portion of the lens section having a trapezoidal cross-section shown in FIG. 42 is referred to as a 2L portion, and portions that are adjacent to slopes of the lens section having the trapezoidal cross-section are referred to as 1 B portions, the refractive index of the 1 B portion is more similar to the refractive index of the 1 L portion than the 2L portion.

As shown in FIG. 42, the 1 B portion, the 1 L portion and the nL portion may be arranged in the width direction of the lens section, such that the refractive index of the lens section has a one-dimensional gradient in the width direction.

In particular, it is possible for the refractive index of the lens section to have the one-dimensional gradient only in the width direction but be uniform in the other directions, for example, in the depth direction thereof (z direction in FIG. 42).

In addition, the refractive index of the lens section may be symmetrical about an axis of symmetry, which is the centerline in the depth direction thereof (z direction).

As an alternative, the refractive index of the background layer may have a one-dimensional gradient in the width direction of the lens section. In an example, when a portion of a lens section that is adjacent to the background layer is referred to as a 1 L portion, a portion of the background layer that is adjacent to the 1 L portion is referred to as a 1 B portion, and a portion of the background layer that is farther apart from the 1 L portion than the 1 B portion is referred to as an nB portion, the refractive index of the 1 B portion may be more similar to the refractive index of the 1 L portion than the refractive index of the nB portion.

Here, n may be a natural number of 2 or greater.

The 1 L portion, the 1 B portion, and the nL portion may be arranged in the width direction of the lens section, such that the refractive index of the background layer has a one-dimensional gradient in the width direction of the lens section.

In particular, it is possible for the refractive index of the background layer to have the one-dimensional gradient only in the width direction of the lens section but be uniform in the other directions, for example, in the depth direction of the lens section.

In addition, the refractive index of the background layer may be symmetrical about an axis of symmetry, which is the center line in the depth direction of the lens section.

A method of preparing the lens sections includes the steps of applying UV-curable resin on one surface of a backing, and forming recesses in the UV-curable resin using a forming roll, which has a mirror image of the lens sections patterned in the surface thereof, while irradiating the UV-curable resin with UV radiation. Afterwards, the preparation of the background layer having the recesses is completed by irradiating the UV-curable resin with UV radiation again. After that, the recesses are filled with UV-curable resin that contains an excess amount of low-refractivity monomer, followed by heat treatment at a high temperature (e.g. about 80ºC) and then UV curing, thereby completing the preparation of the lens sections. During the high-temperature heat treatment, the monomer migrates and diffuses into the cured background layer, such that the refractive index shows a gradient.

As an alternative, both the refractive index of the lens sections and the refractive index of the refractive index of the background layer have a gradient.

However, the present invention is not limited to the foregoing embodiments, but may have a variety of other embodiments.

In FIG. 42, the optical film is configured such that the lens sections 42 are buried in the background layer 21.

In the foregoing embodiments, since the lens sections have an engraved structure, there is a great difference between the refractive index of the background layer and the refractive index (about 1) of the air inside the engraved lens sections. Therefore, due to the refraction and reflection of light by the engraved lens sections, a relatively large amount of ghosting occurs, which is problematic. In addition, due to transmission and reflection haze caused by the engraved lens sections, bright-room contrast ratio (BRCR) and resolution are relatively poor.

Accordingly, the present invention can prevent hazing and ghosting by reducing the reflections caused by a sudden difference in refractive indexes by providing the lens sections having a gradient index instead of the air.

The lens sections having a gradient index are arranged in very diverse configurations, and the size thereof can be adjusted so as to satisfy the desired characteristics of the display. The degree of the diffusion and front transmittance of light vary depending on the width and pitch of the lens sections. When the pitch is too narrow, the front transmittance greatly decreases because the amount of light that exits to the front decreases, whereas color shift or grayscale inversion can be greatly reduced because a large amount of the light that exits to the front mixes in the side. Therefore, it is important to design and optimize the lens sections such that they can reduce color shift or grayscale inversion without decreasing the front transmittance.

For the purpose of effective operation in one direction, such as a lateral direction or a vertical direction, it may be preferable to have a one-dimensional refractive index gradient.

The present invention can be applied without being divided depending on the mode, such as TN, patterned vertical alignment (PVA) or in-plane switching (IPS), and the effects may slightly vary depending on the LCD mode.

As shown in FIG. 43 and FIG. 44, the LCD of the invention may also include a panel-protecting transparent substrate 22. In addition, the LCD of the invention may also include a variety of functional films, such as an anti-fog film, an anti-reflection film, a polarizer film, and a phase retardation film. Reference numeral 32 indicates an adhesive layer.

In this case, the individual constitutional layers of the LCD of the invention can be adhered or bonded using an adhesive or a bonding agent. Specific materials thereof may include acrylic adhesives, silicone-based adhesives, urethane-based adhesives, polyvinyl butyral (PMB) adhesives, ethylene vinyl acetate (EVA)-based adhesives, polyvinyl ether (PVE), saturated amorphous polyester, melamine resins, and the like.

FIG 45 is a view showing the color shift-reducing effect of an LCD according to an exemplary embodiment of the invention.

In order to present color shift caused by the birefringence of the liquid crystal material in the LCD using the resultant values, color coordinate values depending on the viewing angle were simulated using an optical simulation program of the Monte Carlo Method.

In order to determine whether or not the lens sections 24 having a gradient index have the color mixing effect, a simulation result was obtained by modeling a bare LCD TV. A simulation result was obtained by disposing an optical film, which has lens sections having a gradient index, on the front surface of the TV. In sequence, the results were compared. When lens sections having a gradient index, of which the width is 45µm and the depth is 50µm, were randomly arranged with a pitch of 90µm in the lateral direction only, the simulation result was as seen in FIG. 45.

The bare LCD TV, which is a reference in the above simulation, is an LED backlight LCD TV having a PVA mode. As is apparent from the result graph, the color shift was reduced by 30% or greater in the lateral direction.

The foregoing descriptions of specific exemplary embodiments of the present invention have been presented with respect to the certain embodiments and drawings. They are not intended to be exhaustive or to limit the invention to the precise forms disclosed, and obviously many modifications and variations are possible for a person having ordinary skill in the art in light of the above teachings.

It is intended therefore that the scope of the invention not be limited to the foregoing embodiments, but be defined by the Claims appended hereto and their equivalents.

## Claims

1. An optical film adapted to reduce color shift in a liquid crystal display in which light emitted from a liquid crystal layer has different colors depending on a viewing angle and a grayscale level owing to birefringence characteristics of the liquid crystal layer, the optical film comprising:
a background layer (21); and
a plurality of lens sections (24) formed in the background layer (21), and spaced apart from each other,
wherein the lens sections (24) and the background layer (21) have a refractive index gradient such that a refractive index gradually changes in a direction from the lens sections (24) to the background layer (21), and
wherein the plurality of lens sections (24) is adapted such that a portion of the light incident onto each of the lens sections (24) is diffused and is mixed with another portion of the light passing between adjacent lens sections (24).

2. The optical film of claim 1, wherein the refractive index gradient is provided in a width direction of each of the lens sections (24).

3. The optical film according to any one of the preceding claims, wherein
each of the lens sections (24) has a 1 L portion adjacent to the background layer (21),
the background layer (21) has a 1 B portion to an nB portion, the 1 B portion being more adjacent to the 1 L portion than the nB portion, and
a refractive index of the 1 B portion is more similar to a refractive index of the 1 L portion than a refractive index of the nB portion.

4. The optical film of claim 3, wherein the 1 L portion and the 1 B portion to the nB portion are arranged in a width direction of each of the lens sections (24), thereby the refractive index gradient being one-dimensional in the width direction of each of the lens sections (24).

5. The optical film according to any one of claims 1 and 2, wherein
the background layer (21) has a 1 B portion adjacent to each of the lens sections (24),
each of the lens sections (24) has a 1 L portion to an nL portion, the 1 L portion being more adjacent to the 1 B portion than the nL portion, and
a refractive index of the 1 L portion is more similar to a refractive index of the 1 B portion than a refractive index of the nL portion.

6. The optical film of claim 5, wherein the 1 B portion and the 1 L portion to the nL portion are arranged in a width direction of each of the lens sections, thereby the refractive index gradient being one-dimensional in the width direction of each of the lens sections.

7. The optical film according to any one of claims 3 to 6, wherein the n is a natural number of 2 or greater.

8. The optical film according to any one of the preceding claims, wherein the refractive index gradient is provided one-dimensionally only in the width direction of each of the lens sections (24).

9. The optical film of claim 8, wherein a refractive index of each of the lens sections (24) is symmetric about a centerline in a depth direction thereof.

10. The optical film according to any one of the preceding claims, wherein the lens sections (24) have a pattern selected from the group consisting of stripes having a polygonal cross-section, waves having a polygonal cross-section, a matrix having a polygonal cross-section, a honeycomb having a polygonal cross-section, dots having a polygonal cross-section, concentric circles having a polygonal cross-section, stripes having a semicircular cross-section, waves having a semicircular cross-section, a matrix having a semicircular cross-section, a honeycomb having a semicircular cross-section, dots having a semicircular cross-section, concentric circles having a semicircular cross-section, stripes having a semi-elliptical cross-section, waves having a semi-elliptical cross-section, a matrix having a semi-elliptical cross-section, a honeycomb having a semi-elliptical cross-section, dots having a semi-elliptical cross-section, concentric circles having a semi-elliptical cross-section, stripes having a semi-oval cross-section, waves having a semi-oval cross-section, a matrix having a semi-oval cross-section, a honeycomb having a semi-oval cross-section, dots having a semi-oval cross-section, and concentric circles having a semi-oval cross-section.

11. The optical film according to any one of the preceding claims, wherein the lens sections (24) are buried in the background layer (21).

12. A liquid crystal display comprising an optical film according to any one of the preceding claims.

13. The liquid crystal display of claim 12, wherein the lens sections (24) of the optical film for reducing color shift are formed in a rear surface of the background layer (21) that faces a display panel of the liquid crystal display.

14. The liquid crystal display according to any one of claims 12 and 13, wherein the optical film for reducing color shift is in close contact with a display panel of the liquid crystal display.

15. The liquid crystal display according to any one of claims 12 to 14,
wherein the liquid crystal display further comprises an adhesive, the optical film for reducing color shift being attached to the display panel via the adhesive or
wherein the background layer has adhesiveness in itself so as to be directly attached to the display panel.
